# FASCICULE DE BREVET EUROPEEN

(11) **EP 0 624 027 B1**
(45) Date de publication et mention de la délivrance du brevet: **03.02.1999**
(21) Numéro de dépôt: 94400892.9
(22) Date de dépôt: 26.04.1994
(51) Int. Cl.: H04N 1/32

(54) **Télécopier avec dispositif d'écoute, sous haute impédance, de ligne téléphonique**
Fernkopiergerät mit hochimpedantem Eingang für die Telefonleitung
Telecopier with high-impedance entrance for the telephone line

(30) Priorité: 04.05.1993 FR 9305295
(43) Date de publication de la demande: 09.11.1994
(73) Titulaire: SOCIETE D'APPLICATIONS GENERALES D'ELECTRICITE ET DE MECANIQUE SAGEM, 75783 Paris Cédex 16 (FR)
(72) Inventeur: Auffray, Jean-Paul, F-95490 Vaureal (FR); Mesure, Michel, F-95000 Cergy (FR)
(74) Mandataire: Bloch, Gérard

(56) Documents cités:
- EP-A- 0 380 976
- EP-A- 0 454 452
- EP-A- 0 497 679
- GB-A- 2 157 918
- GB-A- 2 242 336

## Description

La présente invention concerne un télécopieur agencé pour être relié à une ligne de transmission de données qu'il partage avec un terminal, comprenant des moyens limiteurs de courant agencés pour être reliés, en entrée, à la ligne et transmettre, à une interface de traitement de données du télécopieur, des signaux différentiels de signalisation de la ligne pour, en fonction de ces signaux, relier directement l'interface à la ligne.

Un télécopieur partage souvent, avec un autre appareil terminal de réception de données, l'utilisation d'une ligne d'un réseau téléphonique à laquelle il est raccordé. Cet autre appareil peut être un répondeur téléphonique raccordé, tout comme le télécopieur, en parallèle sur la ligne, chez l'utilisateur de ces appareils. Le coût de l'abonnement pour le raccordement au réseau téléphonique reste ainsi limité à celui d'une seule ligne, mais le réseau téléphonique n'assure plus alors l'aiguillage d'un appel entrant vers celui des deux appareils qui est concerné, puisqu'il n'y a qu'un seul numéro d'appel.

C'est donc l'appareil appelant qui, après établissement d'une communication par "décrochage" d'un des appareils appelés, doit fournir des signaux de signalisation complétant la numérotation d'appel, comme par exemple un signal de fréquence 1100 Hz.

Ainsi, un télécopieur appelant émet des signaux de signalisation sous forme d'une tonalité, spécifique d'un télécopieur, qui est détectée par un dispositif d'écoute, ou de détection, du télécopieur appelé. Ce dernier effectue une préemption par aiguillage, vers lui, de l'appel entrant, en connectant son modem (modulateur-démodulateur) à la ligne et, simultanément, en commandant un interrupteur pour isoler, de la ligne, le répondeur. En l'absence de cette tonalité spécifique, le répondeur, qui avait effectué le "décrochage", conserve l'accès à la ligne et traite l'appel, qui est donc un appel vocal.

Cependant, la ligne n'est prévue pour fournir les signaux de signalisation qu'à un seul appareil appelé. L'autre, ici le télécopieur, ne doit donc prélever qu'une faible partie de la puissance du signal présent en ligne, afin de ne pas l'affaiblir et en perturber la détection.

De ce fait, pour la phase d'écoute de la tonalité spécifique éventuelle, avant aiguillage, seul le répondeur peut "décrocher" pour répondre et ainsi provoquer l'envoi de la tonalité spécifique, le télécopieur appelé n'étant autorisé à se relier à la ligne qu'à travers son dispositif d'écoute, à haute impédance, et non directement par son modem, qui est à basse impédance.

Pour réaliser le dispositif d'écoute, il est connu (voir, par exemple, EP-A-0 497 679) de raccorder, en parallèle sur la ligne, un transformateur à haute impédance d'entrée. Le transformateur assure, par effet différentiel, la réjection des tensions de ligne en mode commun, c'est-à-dire bloque le passage à travers ses circuits des tensions présentes de façon égale sur les deux fils de ligne, tandis qu'il transmet au modem, relié à son secondaire, les signaux de signalisation différentiels, c'est-à-dire mesurables entre les deux fils de ligne.

Cette solution n'est cependant pas satisfaisante car le transformateur présente une impédance réduite pour les fréquences, relativement basses, des signaux de signalisation. Bien qu'un transformateur avec des bobinages à grand nombre de spires, volumineux et coûteux, conserve, à basse fréquence, une impédance qui est moins réduite, celle-ci l'est cependant encore trop pour limiter, comme voulu, la puissance alternative prélevée sur la ligne. Il faut, de ce fait, prévoir un interrupteur pour, dans le cas d'un appel vers le répondeur, isoler, de la ligne, le transformateur, afin qu'il n'affaiblisse pas les signaux de ligne lorsqu'il ne joue aucun rôle.

La présente invention vise à pallier cet inconvénient.

A cet effet, elle concerne un télécopieur du type mentionné ci-dessus, caractérisé par le fait que les moyens limiteurs de courant comportent un amplificateur différentiel de puissance relié à la ligne par deux entrées différentielles à haute impédance.

Ainsi, la détection des signaux de ligne ne nécessite qu'un faible prélèvement de courant, ou de puissance, quelle que soit leur fréquence. Prélevant la puissance juste nécessaire à chaque entrée, qui sert de tampon adaptateur d'impédance, les deux signaux sur les deux entrées de l'amplificateur sont ensuite combinés en aval, de façon différentielle, c'est-à-dire par soustraction, sans que l'impédance des circuits utilisés pour cette opération, tels qu'amplificateur opérationnel, transformateur ou autre, ne puisse perturber la ligne.

Avantageusement, l'amplificateur de puissance comporte en entrée deux amplificateurs de ligne dont les sorties sont reliées aux deux entrées d'un amplificateur différentiel de sortie agencé pour fournir les signaux de signalisation.

On peut alors détecter, si besoin est, des signaux de ligne en mode commun, par exemple des signaux de taxation.

En particulier, il peut être prévu un détecteur de sonnerie comportant un amplificateur relié en entrée aux deux sorties des amplificateurs de ligne pour fournir un signal de détection de sonnerie en réponse à la présence d'une tension de sonnerie sur la ligne.

Le détecteur de sonnerie est adapté pour détecter des tensions élevées, si bien que l'amplificateur de sortie n'a besoin de détecter que des signaux d'amplitude modérée.

Avantageusement encore, il est prévu deux condensateurs respectivement reliés aux deux fils de ligne, pour assurer une isolation galvanique entre la ligne et l'amplificateur de puissance.

On a ainsi un branchement symétrique sur les deux fils de ligne, ce qui améliore la réjection des signaux en mode commun. En outre, et dans ce cas, l'amplificateur de puissance est alors mieux protégé contre les surtensions provenant de la ligne.

Pour encore améliorer la protection contre ces surtensions, il peut encore être prévu une source d'alimentation continue, isolée de la ligne, pour alimenter l'amplificateur de puissance.

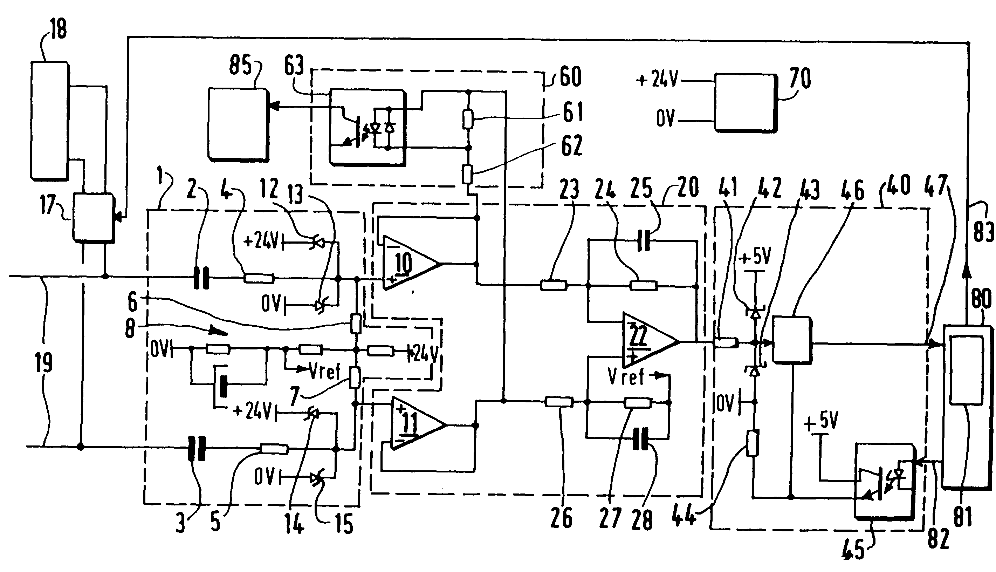

L'invention sera mieux comprise à l'aide de la description suivante de la forme de réalisation préférée du télécopieur de l'invention, en référence à la figure unique qui représente schématiquement ses circuits.

Le télécopieur de l'invention, non représenté en entier, est relié en entrée à une ligne 19 du réseau téléphonique commuté par un circuit d'adaptation 1 appartenant à un dispositif d'écoute 1, 20, 40 et 60 du télécopieur. La ligne 19 est aussi reliée, à travers un interrupteur commandable 17, à un autre terminal de réception de données, ici un répondeur téléphonique 18. En sortie, le circuit d'adaptation 1 est relié au circuit 20, amplificateur différentiel, lui-même relié, par une sortie, au circuit 40, détecteur, et, par deux sorties différentielles intermédiaires, au circuit 60, détecteur de sonnerie.

Une source 70 d'alimentation continue +24 volts, par rapport à un potentiel de masse OV, isolée de la ligne 19 et du reste du télécopieur, alimente les circuits ci-dessus. Une alimentation +5 volts (+5V), non représentée, en est dérivée.

Le circuit d'adaptation 1 présente une disposition symétrique par rapport aux deux fils de la ligne 19. Il comporte deux condensateurs 2, 3 reliés chacun en propre, d'un côté, à l'un des fils de ligne 19 et, de l'autre, à une résistance 4, 5 en série avec une extrémité d'une autre résistance 6, 7. Les résistances 6, 7 sont reliées l'une à l'autre par leur autre extrémité et polarisées en ce point par un pont diviseur résistif 8 branché aux bornes de la source 70. Les points communs aux résistances 4 et 6 ainsi que 5 et 7 sont respectivement reliés à deux entrées non inverseuses, à haute impédance, de deux amplificateurs 10, 11 du circuit différentiel 20, protégées chacune par un pont de deux diodes, ici des diodes Zener 12, 13 et 14, 15 montées en écrêteur par conduction diode respectivement vers le +24V et la masse.

Dans le circuit différentiel 20, les deux amplificateurs 10, 11, ici du type amplificateur opérationnel monté en gain unité, sont respectivement reliés en sortie à deux entrées différentielles d'un amplificateur différentiel 22 du même type. Branché entre les sorties des amplificateurs 10 et 22, un pont diviseur résistif 23, 24 est relié, à son point intermédiaire, à l'entrée inverseuse de l'amplificateur 22, un condensateur d'intégration 25 étant en parallèle sur la résistance 24, entre l'entrée inverseuse et la sortie de l'amplificateur 22.

L'entrée non inverseuse de l'amplificateur 22 est associée à un montage diviseur 26, 27, 28 semblable au montage 23, 24, 25 et branché entre la sortie de l'amplificateur 11 et une tension de référence Vréf fixe, de quelques volts, obtenue sur le pont diviseur 8 aux bornes d'un condensateur de forte valeur, à la masse par sa borne négative.

La sortie de l'amplificateur 22 est reliée à une borne d'une résistance série 41 d'entrée du circuit 40 reliée, à son autre borne, à un pont de deux diodes zener 42, 43 d'écrêtage par conducteur diode, respectivement au +5V et à la masse.

Une résistance 44 de tirage à la masse est reliée à l'émetteur du transistor d'un photo-coupleur 45 dont le collecteur reçoit la tension +5V. L'émetteur ci-dessus est aussi relié à une entrée de commande d'un circuit d'interface 46, ici un photo-coupleur. Une entrée de données du circuit 46 est reliée au point commun à la résistance 41 et aux deux zeners 42 et 43, tandis qu'une sortie isolée appartenant au circuit 46 est reliée à un modem 81 d'une interface de traitement de données 80 du télécopieur, reconnaissant les signaux de signalisation de ligne transmis par le dispositif d'écoute. Le circuit de traitement 80 commande le photo-coupleur 45 par un signal 82 et l'interrupteur 17 par un signal 83. On comprendra qu'un circuit amplificateur à impédance de sortie suffisamment basse peut être prévu, en plus ou à la place du photo-coupleur 46, pour fournir suffisamment de puissance au modem 81, sous réserve d'assurer l'isolation galvanique.

Le circuit 60 détecteur de sonnerie comporte un pont diviseur résistif 61, 62 branché entre les deux sorties des amplificateurs 10 et 11. La diode d'entrée d'un photo-coupleur 63 est reliée en parallèle sur la résistance 61, tandis que la sortie du photo-coupleur 63 est reliée à l'entrée d'un circuit 85 de gestion de ligne du télécopieur.

Le fonctionnement du télécopieur, et en particulier de son dispositif d'écoute, va maintenant être expliqué.

A l'arrivée d'un appel, le répondeur 18, qui est rélié à la ligne 19 par l'interrupteur 17, fermé, effectue un "décrochage" fournissant une réponse au terminal appelant, qui, s'il s'agit d'un télécopieur, enverra une tonalité spécifique.

Les signaux alternatifs en mode commun de la ligne 19 ne sont que peu amplifiés par les amplificateurs 10, 11 car la source 70 est isolée de la ligne 19 et "flotte".

L'amplificateur 22 reçoit, sur ses deux entrées, les signaux alternatifs présents sur les deux fils de ligne 19, affaiblis par les ponts diviseurs 2, 4, 6 et 3, 5, 7 du circuit 1 et n'en transmet que la composante différentielle. La partie subsistante du mode commun des signaux issus des amplificateurs 10, 11 est éliminée par l'effet différentiel dans l'amplificateur 22. Son signal de sortie est lu par le circuit de traitement 80 et sous sa commande (82), à travers le circuit 46 fournissant alors un signal de signalisation 47.

Les entrées des amplificateurs 10 et 11 étant à haute impédance, le circuit 1 a surtout un but d'équilibrage par rapport à la terre et aussi de protection de ces entrées contre des surtensions venant de la ligne 19. Les résistances série 4, 5 du circuit d'adaptation 1 ont une valeur élevée, si bien que le courant alternatif prélevé sur la ligne 19 est très faible. La résistance 6, 7 sert à fixer, avec la résistance 4, 5 associée, un rapport d'atténuation de la tension appliquée à l'entrée de l'amplificateur 10, 11 associé qui soit indépendant des variations possibles de l'impédance de cette entrée. Comme celle-ci est élevée, il suffit de choisir, pour les résistances 6 et 7, une valeur un peu moins élevée, qui, en série avec la résistance 4, 5, présente en ligne une impédance élevée.

Quant aux condensateurs 2 et 3, ils complètent la fonction des résistances 4 et 5 en assurant ici, pour le continu, une isolation par rapport à la ligne 19.

Si les signaux de signalisation 47 correspondent à une tonalité spécifique aux télécopieurs, le circuit de traitement 80 commande la connexion directe de son modem 81 à la ligne 19, par une liaison non représentée. Le modem 81, qui recevait les signaux alternatifs de ligne au travers du dispositif d'écoute 1, 20, 40 les reçoit alors directement et, en outre, peut alors émettre sur la ligne 19. Simultanément, le circuit de traitement 80 engendre le signal 83 qui a pour effet d'ouvrir l'interrupteur 17 et d'isoler le répondeur 18 par rapport à la ligne 19. Le signal 83 disparaît à la fin de la communication du télécopieur, ce qui raccorde à nouveau le répondeur 18 à la ligne 19, au repos.

Le circuit 60 détecteur de sonnerie détecte une faible fraction de la tension de sonnerie aux bornes de la résistance 61, qui fait office de circuit à seuil shuntant la diode d'entrée du photo-coupleur 63 et évitant son excitation par les tensions de ligne de faible niveau, ne dépassant pas quelques volts. Le circuit 85 de gestion de ligne reçoit un signal correspondant et transmet, à la disparition de ce signal, un signal d'activation au circuit 80, indiquant qu'il a été répondu à l'appel arrivant et que des signaux de signalisation correspondant à la tonalité spécifique sont susceptibles d'arriver sur le modem 81 à travers le circuit d'écoute.

## Revendications

1. Télécopieur agencé pour être relié à une ligne (19) de transmission de données qu'il partage avec un terminal (18), comprenant des moyens de liaison (1, 20, 40) agencés pour être reliés, en entrée, à la ligne (19) et transmettre, à une interface de traitement de données (80) du télécopieur, des signaux différentiels de signalisation de la ligne (19) pour, en fonction de ces signaux, relier directement l'interface (80) à la ligne (19),
caractérisé par le fait que
les moyens de liaison (1, 20, 40) comportent un amplificateur différentiel (20) relié à la ligne (19) par deux entrées à haute impédance.

2. Télécopieur selon la revendication 1, dans lequel l'amplificateur (20) comporte en entrée deux amplificateurs de ligne (10, 11) dont les sorties sont reliées aux deux entrées d'un amplificateur différentiel (22) de sortie agencé pour fournir les signaux de signalisation.

3. Télécopieur selon la revendication 2, dans lequel il est prévu un détecteur de sonnerie (60) comportant un amplificateur (63) relié en entrée aux deux sorties des amplificateurs de ligne (10, 11) pour fournir un signal de détection de sonnerie en réponse à la présence d'une tension de sonnerie sur la ligne (19).

4. Télécopieur selon l'une des revendications 1 à 3, dans lequel il est prévu deux condensateurs (2, 3) respectivement reliés aux deux fils de ligne (19), pour assurer, pour la composante continue du courant, une isolation entre les fils de ligne (19) et l'amplificateur (20).

5. Télécopieur selon la revendication 4, dans lequel il est prévu une source (70) d'alimentation continue, isolée de la ligne (19), pour alimenter l'amplificateur (20).

## Patentansprüche

1. Telekopierer, welcher mit einer Datenübertragungsleitung (19) verbindbar ist, welche mit einem Terminalgerät (18) geteilt wird, welcher eine Verbindungseinrichtung (1, 20, 40) aufweist, welche derart betreibbar ist, daß sie am Eingang mit der Leitung (19) verbindbar ist, und zu einem Interface (80) zur Datenverarbeitung des Telekopierers differentiale Signale des Signalsystems in der Leitung (19) übertragen kann, um in Abhängigkeit von diesen Signalen direkt das Interface (80) mit der Leitung (19) zu verbinden,
**dadurch gekennzeichnet,** daß
die Verbindungseinrichtung (1, 20, 40) einen Differentialverstärker (20) aufweist, welcher über zwei Eingänge mit hoher Impedanz mit der Leitung (19) verbunden ist.

2. Telekopierer nach Anspruch 1, bei dem der Verstärker (20) am Eingang zwei Leitungsverstärker (10, 11) aufweist, deren Ausgänge mit den zwei Eingängen eines Ausgang Differentialverstärkers (22) verbunden sind, welcher Signale des Signalsystems weiterleitet.

3. Telekopierer nach Anspruch 2, bei dem ein Ruftondetektor (60) vorgesehen ist, welcher einen Verstärker (63) aufweist, welcher am Eingang mit den beiden Ausgängen der Leitungsverstärker (10, 11) verbunden ist, um ein Ruftondetektionssignal in Abhängigkeit von dem Vorliegen einer Ruftonspannung an der Leitung (19) zu erzeugen.

4. Telekopierer nach einem der Ansprüche 1 bis 3, bei dem zwei Kondensatoren (2, 3) vorgesehen sind, welche jeweils mit den beiden drähten der Leitung (19) verbunden sind, um für den Gleichteil des Stromes eine Isolierung zwischen den Drähten der Leitung (19) und dem Verstärker (20) sicherzustellen.

5. Telekopierer nach Anspruch 4, bei dem eine Gleichstromquelle (70) vorgesehen ist, welche von der Leitung (19) getrennt ist und zur Versorgung des Verstärkers (20) dient.

## Claims

1. Facsimile machine arranged to be connected to a data transmission line (19) which it shares with a terminal (18), comprising connection means (1, 20, 40) arranged to be connected, at the input, to the line (19) and to transmit, to a data processing interface (80) of the facsimile machine, differential indicating signals from the line (19) in order, depending on these signals, to connect the interface (80) directly to the line (19), characterised by the fact that the connection means (1, 20, 40) comprise a differential amplifier (20) connected to the line (19) by two high impedance inputs.

2. Facsimile machine according to Claim 1, in which the amplifier (20) comprises at the input two line amplifiers (10, 11), whereof the outputs are connected to the two inputs of a differential output amplifier (22) arranged to supply the indicating signals.

3. Facsimile machine according to Claim 2, in which a ringing detector (60) is provided, comprising an amplifier (63) connected at the input to the two outputs of the line amplifiers (10, 11) in order to supply a ringing detection signal in response to the presence of a ringing voltage on the line (19).

4. Facsimile machine according to one of Claims 1 to 3, in which two capacitors (2, 3) are provided, respectively connected to the two line wires (19), in order to ensure, for the direct component of the current, an insulation between the line wires (19) and the amplifier (20).

5. Facsimile machine according to Claim 4, in which a direct current supply source (70) is provided, isolated from the line (19), in order to supply the amplifier (20).
